(19) Europäisches Patentamt
European Patent Office
Office européen des brevets

(11) **EP 4 417 635 A1**

(12) **EUROPEAN PATENT APPLICATION**


(43) Date of publication:
**21.08.2024 Bulletin 2024/34**

(21) Application number: **24157246.0**

(22) Date of filing: **13.02.2024**

(51) International Patent Classification (IPC):
***C08G 18/44*** *(2006.01)* ***C08G 64/30*** *(2006.01)*
***C09D 175/06*** *(2006.01)*

(52) Cooperative Patent Classification (CPC):
**C08G 18/44; C08G 64/0208; C08G 64/305; C09D 175/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 JP 2023020822**



(71) Applicant: **Tosoh Corporation**
**Yamaguchi 746-8501 (JP)**

(72) Inventor: **HONDA, Kohei**
**Yokkaichi-shi, 510-8540 (JP)**

(74) Representative: **TBK**
**Bavariaring 4-6**
**80336 München (DE)**


(54) **POLYCARBONATE DIOL, URETHANE RESIN, AND COATING AGENT**


(57) A polycarbonate diol having a repeating unit (A) of a carbonate structure, and containing terminal hydroxyl groups, wherein
90 to 100 mol% of the repeating unit (A) is a repeating unit (B) of a 3-methylpentan-1,5-diyl group-containing carbonate structure and/or a repeating unit (C) of a 1,6-hexanediyl group-containing carbonate structure,
the polycarbonate diol contains a polycarbonate diol (D) represented by the following formula (D),
a number average molecular weight calculated from a hydroxyl value of the polycarbonate diol is 300 to 2800 g/mol, and in an LC spectrum measured for the polycarbonate diol, when $X_0$ represents the number of repeating units of the polycarbonate diol (D) corresponding to a peak of molecular weight closest to the above number average molecular weight, the number of consecutive peaks at each of which a peak area value ratio to an area value of the peak at which the number of repeating units is $X_0$ is 0.90 to 1.10 is 2 to 7, including the peak at which the number of repeating units is $X_0$,

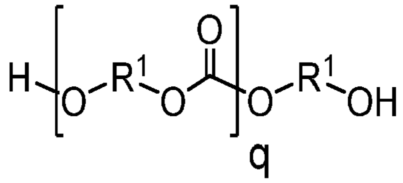

(D)

wherein $R^1$ represents $-(CH_2)_6-$ or $-CH_2CH_2CH(CH_3)CH_2CH_2-$.


*Fig. 1*

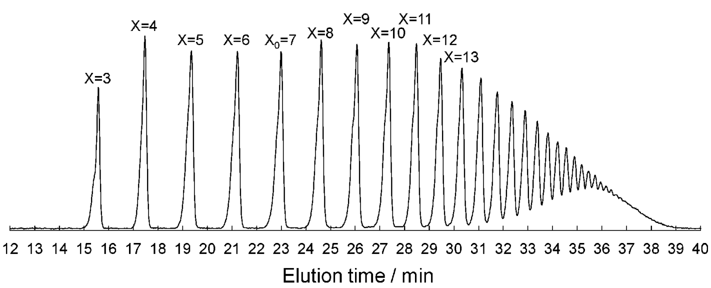


EP 4 417 635 A1

## Description

### BACKGROUND OF THE INVENTION

### Field of the Invention

The present disclosure relates to a polycarbonate diol, a urethane resin, and a coating agent.

### Related Background Art

Polycarbonate polyols are useful as raw materials for producing urethane resins (also called polyurethane resins) by reaction with polyisocyanate compounds, and useful as raw materials for adhesives, paints, and the like.

As a polycarbonate diol, which is one of polycarbonate polyols, a polycarbonate diol using only 1,6-hexanediol as a diol component is used in general.
However, there are problems that such a polycarbonate diol is crystalline and solid at ordinary temperature, and is thus difficult to handle.

In order to solve these problems, it has been proposed to produce a polycarbonate diol by using two or more diols. For example, Japanese Unexamined Patent Application Publication No. 2002-275234 (PTL 1) discloses a polycarbonate diol synthesized by using 1,6-hexanediol and 3-methyl-1,5-pentanediol as diol components and tetrabutyl titanate as a catalyst.

### SUMMARY OF THE INVENTION

However, there has been a problem that in the case where a polycarbonate diol is used in production equipment involving fluidity, it is difficult to balance mold processability and viscosity stability. Then, even in the polycarbonate diol described in the PTL 1, there is still room for an improvement in terms of balancing mold processability and viscosity stability.

In view of this, an object of one aspect of the present disclosure is to provide a polycarbonate diol that balances mold processability and viscosity stability at 25°C. In addition, an object of another aspect of the present disclosure is to provide a urethane resin and a coating agent obtained from the polycarbonate diol.

The present disclosure provides the following aspects.

[1] A polycarbonate diol having a repeating unit (A) represented by the following formula (A), and containing terminal hydroxyl groups, wherein

90 to 100 mol% of the repeating unit (A) is a repeating unit (B) represented by the following formula (B) and/or a repeating unit (C) represented by the following formula (C),
the polycarbonate diol contains a polycarbonate diol (D) represented by the following formula (D),
a number average molecular weight calculated from a hydroxyl value of the polycarbonate diol is 300 to 2800 g/mol, and
in an LC spectrum measured for the polycarbonate diol, when $X_0$ represents the number of repeating units of the polycarbonate diol (D) corresponding to a peak of molecular weight closest to the number average molecular weight calculated from the hydroxyl value of the polycarbonate diol, the number of consecutive peaks at each of which a peak area value ratio to an area value of the peak at which the number of repeating units is $X_0$ is 0.90 to 1.10 is 2 to 7, including the peak at which the number of repeating units is $X_0$,

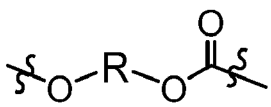

(A)

where in the formula (A), R represents a divalent aliphatic or alicyclic hydrocarbon group having 2 to 15 carbon atoms,

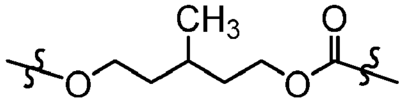

(B),

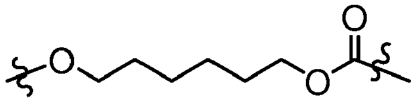

(C),

and

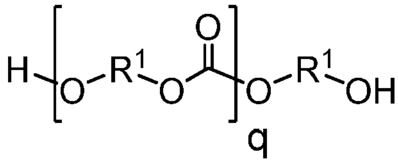

(D)

where in the formula (D), $R^1$ represents *-$(CH_2)_6$-* or *-$CH_2CH_2CH(CH_3)CH_2CH_2$-*,
* at both ends in the formulas represents binding sites with two oxygen atoms bound to both ends of $R^1$,
q represents an integer of 1 or more, and the plurality of $R^1$ may be the same or different.

[2] The polycarbonate diol according to [1], wherein
an amount of the repeating unit (B) is 20 to 100 mol% to a total amount of the repeating unit (A).
[3] The polycarbonate diol according to [1] or [2], wherein
an amount of the repeating unit (B) is 20 to 100 mol% to a total amount of the repeating unit (B) and the repeating unit (C).
[4] The polycarbonate diol according to any one of [1] to [3], wherein
all of the repeating unit (A) is the repeating unit (B) and/or the repeating unit (C).
[5] The polycarbonate diol according to any one of [1] to [4], wherein
90 to 100 mol% of the polycarbonate diol is the polycarbonate diol (D).
[6] The polycarbonate diol according to any one of [1] to [5], wherein
a ratio $\eta_{1000}/\eta_1$ of a viscosity $\eta_{1000}$ at a shear rate of 1000 $s^{-1}$ and a temperature of 25°C to a viscosity $\eta_1$ at a shear rate of 1 $s^{-1}$ and a temperature of 25°C is 0.40 to 0.80.
[7] A urethane resin including:
a reaction product of the polycarbonate diol according to any one of [1] to [6] and an isocyanate.
[8] A coating agent including:
the urethane resin according to [7].

One aspect of the present disclosure can provide a polycarbonate diol that balances mold processability and viscosity stability at 25°C. In addition, another aspect of the present disclosure can provide a urethane resin and a coating agent obtained from the polycarbonate diol.

## BRIEF DESCRIPTION OF THE DRAWINGS

Fig. 1 is a diagram showing an LC spectrum of a polycarbonate diol obtained in Comparative Example 2.
Fig. 2 is a graph showing a relation between a shear rate and a viscosity of a polymer.

## DETAILED DESCRIPTION OF THE PREFERRED EMBODIMENTS

Hereinafter, an embodiment of the present disclosure will be described in detail. Note that in the Specification, a numerical range shown by using "to" indicates a range including numerical values stated before and after the "to" as a minimum value and a maximum value. A minimum value or a maximum value of a numerical range shown by using "to" can be combined as desired with a maximum value or a minimum value of another numerical range shown by using "to". In addition, an upper limit value and a lower limit value stated individually also can be combined as desired.

<Polycarbonate Diol>

A polycarbonate diol of one aspect of the present disclosure is a polycarbonate diol having a repeating unit (A) represented by the following formula (A), and containing terminal hydroxyl groups, wherein

90 to 100 mol% of the repeating unit (A) is a repeating unit (B) represented by the following formula (B) and/or a repeating unit (C) represented by the following formula (C),
the polycarbonate diol contains a polycarbonate diol (D) represented by the following formula (D),
a number average molecular weight calculated from a hydroxyl value of the polycarbonate diol is 300 to 2800,
in an LC spectrum measured for the polycarbonate diol, when $X_0$ represents the number of repeating units of the polycarbonate diol (D) corresponding to a peak of molecular weight closest to the number average molecular weight calculated from the hydroxyl value of the polycarbonate diol, the number of consecutive peaks at each of which a peak area value ratio to an area value of the peak at which the number of repeating units is $X_0$ is 0.90 to 1.10 is 2 to 7, including the peak at which the number of repeating units is $X_0$,

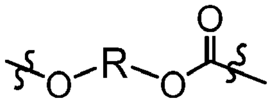

(A)

where in the formula (A), R represents a divalent aliphatic or alicyclic hydrocarbon group having 2 to 15 carbon atoms,

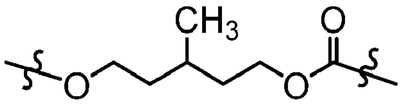

(B),

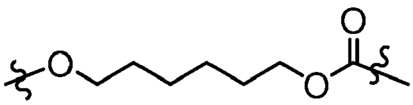

(C),

and

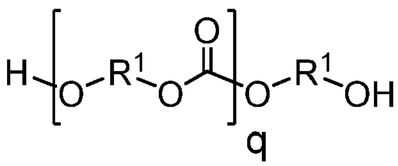

(D)

where in the formula (D), $R^1$ represents $*\text{-}(CH_2)_6\text{-}*$ or $*\text{-}CH_2CH_2CH(CH_3)CH_2CH_2\text{-}*$,
* at both ends in the formulas represents binding sites with two oxygen atoms bound to both ends of $R^1$,
q represents an integer of 1 or more, and the plurality of $R^1$ may be the same or different.

Note that in the present disclosure, the "peak of molecular weight closest to the number average molecular weight calculated from the hydroxyl value of the polycarbonate diol" means a peak of molecular weight having the smallest absolute value of difference from a number average molecular weight calculated from the hydroxyl value of the polycarbonate diol among peaks of molecular weight calculated based on the number of repeating units of the polycarbonate diol (D). Note that in the case where there are two peaks of molecular weight each having the smallest absolute value of difference from the number average molecular weight calculated from the hydroxyl value of the polycarbonate diol, a peak of the smaller molecular weight is employed.
The polycarbonate diol of one aspect of the present disclosure is a polycarbonate diol having the repeating unit (A), and containing terminal hydroxyl groups. In the formula (A), R represents a divalent aliphatic or alicyclic hydrocarbon group having 2 to 15 carbon atoms. The divalent aliphatic hydrocarbon group may be linear or branched. In addition, the plurality of R present in the polycarbonate diol may be the same or different.
The divalent linear aliphatic hydrocarbon group in R has 2 to 15 carbon atoms, preferably 3 to 12 carbon atoms, and more preferably 4 to 10 carbon atoms.
A specific example of the divalent linear aliphatic hydrocarbon group having 2 to 15 carbon atoms in R is not particularly limited, but includes, for example, an ethylene group, a propylene group (a trimethylene group), a butylene group (a tetramethylene group), a pentylene group (a pentamethylene group), a hexylene group (a hexamethylene group), a heptylene group (a heptamethylene group), an octylene group (an octamethylene group), a nonylene group (a nonamethylene group), and the like. Among these, a propylene group, a butylene group, a pentylene group, a hexylene

group, or a nonylene group is preferable from the viewpoint of versatility.

The divalent branched aliphatic hydrocarbon group in R has 3 to 15 carbon atoms, preferably 4 to 12 carbon atoms, more preferably 5 to 10 carbon atoms, and particularly preferably 6 to 9 carbon atoms.

A specific example of the divalent branched aliphatic hydrocarbon group in R is not particularly limited, but includes, for example, an isopropylene group, an isobutylene group, a tert-butylene group, an isopentylene group, a 2,2-dimethylpropylene group, an isohexylene group, a 3-methylpentylene group, an isoheptylene group, an isooctylene group, a 2-methyloctylene group, and the like. Among these, an isopentylene group, an isohexylene group, a 3-methylpentylene group, or a 2-methyloctylene group is preferable from the viewpoint of versatility.

The divalent alicyclic hydrocarbon group in R has 3 to 15 carbon atoms, preferably 4 to 12 carbon atoms, and more preferably 6 to 9 carbon atoms.

A specific example of the divalent alicyclic hydrocarbon group in R is not particularly limited, but includes, for example, a cyclopropylene group, a cyclobutylene group, a cyclopentylene group, a cyclohexylene group, a cycloheptylene group, and the like. Among these, a cyclopentylene group or a cyclohexylene group is preferable from the viewpoint of versatility.

Among these divalent aliphatic or alicyclic hydrocarbons groups having 2 to 15 carbon atoms, R is preferably a divalent linear aliphatic hydrocarbon group having 3 to 9 carbon atoms or a divalent branched aliphatic hydrocarbon group having 3 to 9 carbon atoms, and more preferably a divalent linear aliphatic hydrocarbon group having 4 to 6 carbon atoms or a divalent branched aliphatic hydrocarbon group having 4 to 6 carbon atoms.

The repeating unit (A) is such that 90 to 100 mol% of the repeating unit (A) is the repeating unit (B) and/or the repeating unit (C) (preferably, the repeating unit (B) and the repeating unit (C)), and it is preferable that 95 to 100 mol% of the repeating unit (A) be the repeating unit (B) and/or the repeating unit (C) (more preferably, the repeating unit (B) and the repeating unit (C)), and it is more preferable that all of the repeating unit (A) be the repeating unit (B) and/or the repeating unit (C) (further preferably, the repeating unit (B) and the repeating unit (C)). When the ratio of the repeating unit (B) and/or the repeating unit (C) is within the above range, it tends to be easy to obtain a polycarbonate diol that has a favorable handleability and balances mold processability and viscosity stability at 25°C.

The amount of the repeating unit (B) is preferably 20 to 100 mol%, more preferably 30 to 99 mol%, further preferably 40 to 95 mol%, and particularly preferably 50 to 90 mol%, relative to the total amount of the repeating unit (A). When the ratio is within the above range, the polycarbonate diol obtained tends to have properties of liquid at 25°C and be excellent in handleability.

In addition, the amount of the repeating unit (B) is preferably 20 to 100 mol%, more preferably 30 to 99 mol%, further preferably 40 to 95 mol%, and particularly preferably 50 to 90 mol%, relative to the total amount of the repeating unit (B) and the repeating unit (C). When the ratio is within the above range, the polycarbonate diol obtained tends to have properties of liquid at 25°C and be excellent in handleability.

The polycarbonate diol of one aspect of the present disclosure includes a polycarbonate diol (D) represented by the formula (D).

In the formula (D), $R^1$ represents $*-(CH_2)_6-*$ or $*-CH_2CH_2CH(CH_3)CH_2CH_2-*$,

> * at both ends in the formula represents binding sites with two oxygen atoms bound to both ends of $R^1$, and
> q represents an integer of 1 or more, preferably 1 to 30, more preferably 2 to 20, and further preferably 3 to 15. In addition, the plurality of $R^1$ may be the same or different.

Among such polycarbonate diol (D), a polycarbonate diol (D) having 1,6-hexanediyl group and 3-methylpentan-1,5-diyl group, that is, having two or more alkanediyl groups as $R^1$ tends to be easy to be liquid at 25°C and balance mold processability and viscosity stability at 25°C.

In addition, in the polycarbonate diol (D) having two or more alkanediyl groups, the ratio of the number of moles of a 3-methylpentan-1,5-diyl group to the total number of moles of alkanediyl groups contained as $R^1$ in the polycarbonate diol (D) (the total number of moles of a 1,6-hexanediyl group and a 3-methylpentan-1,5-diyl group) is preferably 0.20 to 1.00, more preferably 0.30 to 0.99, further preferably 0.40 to 0.95, and particularly preferably 0.50 to 0.90, from the viewpoint that the polycarbonate diol is liquid at 25°C and is easy to balance mold processability and viscosity stability at 25°C.

The polycarbonate diol of one aspect of the present disclosure is such that it is preferable that 90 to 100 mol% of the polycarbonate diol be the polycarbonate diol (D), it is more preferable that 95 to 100 mol% of the polycarbonate diol be the polycarbonate diol (D), and it is particularly preferable that all of the polycarbonate diol be the polycarbonate diol (D), from the viewpoint that the polycarbonate diol is liquid at 25°C and is easy to balance mold processability and viscosity stability at 25°C.

In addition, the hydroxyl value of the polycarbonate diol of one aspect of the present disclosure is preferably 40 to 375 mgKOH/g, more preferably 45 to 225 mgKOH/g, further preferably 48 to 140 mgKOH/g, and particularly preferably 55 to 120 mgKOH/g. The hydroxyl value of the polycarbonate diol may be 60 mgKOH/g or more, 65 mgKOH/g

or more, 70 mgKOH/g or more, 75 mgKOH/g or more, 80 mgKOH/g or more, 85 mgKOH/g or more, 90 mgKOH/g or more, or 95 mgKOH/g or more, and may be 95 mgKOH/g or less, 90 mgKOH/g or less, 85 mgKOH/g or less, 80 mgKOH/g or less, 75 mgKOH/g or less, 70 mgKOH/g or less, 65 mgKOH/g or less, 60 mgKOH/g or less, or 55 mgKOH/g or less. Note that the hydroxyl value of a polycarbonate diol means the number of milligrams (mg) of potassium hydroxide equivalent to hydroxy groups in 1 g of the polycarbonate diol and can be measured in compliance with JIS K1557-1.

Moreover, the number average molecular weight calculated from the hydroxyl value of the polycarbonate diol of one aspect of the present disclosure is preferably 300 to 2800 g/mol, more preferably 500 to 2500 g/mol, further preferably 800 to 2300 g/mol, and particularly preferably 1000 to 2000 g/mol. The number average molecular weight calculated from the hydroxyl value of the polycarbonate diol may be 1100 g/mol or more, 1150 g/mol or more, 1200 g/mol or more, 1300 g/mol or more, 1450 g/mol or more, 1600 g/mol or more, 1700 g/mol or more, 1800 g/mol or more, or 1900 g/mol or more, and may be 1900 g/mol or less, 1800 g/mol or less, 1700 g/mol or less, 1600 g/mol or less, 1450 g/mol or less, 1300 g/mol or less, 1200 g/mol or less, 1150 g/mol or less, or 1100 g/mol or less.

In the polycarbonate diol of one aspect of the present disclosure, in an LC spectrum measured therefor, when $X_0$ represents the number of repeating units of the polycarbonate diol (D) corresponding to a peak of molecular weight closest to a number average molecular weight (absolute molecular weight) calculated from the hydroxyl value of the polycarbonate diol, the number of consecutive peaks at each of which a peak area value ratio to an area value $S(X_0)$ of the peak at which the number of repeating units is $X_0$ [$S(X)/S(X_0)$, S(X) is an area value of the peak at which the number of repeating units of the polycarbonate diol (D) is X] is 0.90 to 1.10 is 2 to 7, preferably 3 to 6, and particularly preferably 4 to 5, including the peak at which the number of repeating units is $X_0$. When the number of consecutive peaks at each of which the peak area value ratio [$S(X)/S(X_0)$] is 0.90 to 1.10 is equal to or more than the lower limit, including the peak at which the number of repeating units is $X_0$, it tends to be easy to obtain a polycarbonate diol excellent in mold processability at 25°C. In addition, when the number of consecutive peaks at each of which the peak area value ratio [$S(X)/S(X_0)$] is 0.90 to 1.10 is equal to or less than the upper limit, including the peak at which the number of repeating units is $X_0$, it tends to be easy to obtain a polycarbonate diol excellent in viscosity stability at 25°C. Moreover, in peaks at each of which the number of repeating units is $X=X_0-\alpha$ ($\alpha$ is a positive integer of: 1, 2, 3, 4, ....), when there is a peak having a peak area value ratio [$S(X)/S(X_0)$] of 1.10 or more, it tends to be easy to obtain a polycarbonate diol further excellent in mold processability at 25°C.

The peak area value ratio [$S(X)/S(X_0)$] in an LC spectrum of a polycarbonate diol can be obtained by the following method. Specifically, in an LC spectrum of a polycarbonate diol, a peak of molecular weight having the smallest absolute value of a difference from a number average molecular weight calculated from a hydroxyl value of the polycarbonate diol is determined as the peak of molecular weight closest to the number average molecular weight calculated from the hydroxyl value of the polycarbonate diol, and the number of repeating units $X_0$ of the polycarbonate diol (D) corresponding to this peak is obtained. Note that in the case where there are two peaks of molecular weight each having the smallest absolute value of a difference from the number average molecular weight calculated from the hydroxyl value of the polycarbonate diol, a peak having the smaller molecular weight is employed. Next, in the LC spectrum, the area value S(X) of each peak [X represents the number of repeating units of the polycarbonate diol (D), and $X= ..., X_0-2, X_0-1, X_0, X_0+1, X_0+2, ...$] is obtained, and the peak area value ratio [$S(X)/S(X_0)$] of each peak to the area value $S(X_0)$ of the peak at which the number of repeating units is $X_0$ is calculated. Note that X and $X_0$ are each an integer within a range of the number of repeating units of the polycarbonate diol (D) at a peak at which the molecular weight is 300 to 2800 g/mol, that is, 3 to 19, from the detection limit of the LC measurement.

Note that a correspondence relationship between each peak obtained from an LC measurement and the number of repeating units X of the polycarbonate diol (D) can be confirmed, for example, by conducting MS measurement (apparatus: microTOF manufactured by Bruker Daltonics, ion source: APCI, measurement mode: positive mode) of each peak alone and analyzing a main peak of a spectrum obtained.

The number of consecutive peaks at each of which has an area value ratio [$S(X)/S(X_0)$] thus calculated within a range of 0.90 to 1.10, including a peak at which the number of repeating units is $X_0$, is obtained.

In general, there is a tendency that the higher the molecular weight is, the more likely a polymer is to express favorable physical properties. However, since such a polymer has a high viscosity, the mold processability tends to decrease in injection molding. On the other hand, it is known that the viscosity of a polymer decreases along with an increase in shear rate. In view of this, even in the case of a polymer having a high viscosity in a state where the shear rate is low (a state close to a stationary state), if the polymer has a low viscosity in a flowing state during mold processing, that is, in a state where the shear rate is high, the polymer tends to be easy to express favorable physical properties, and it tends to be easy to obtain a polymer excellent in mold processability.

As a polyol to be used as a raw material of a urethane resin, a polyol having a high molecular weight is favorably used in order to reduce the amount of urethane groups in a urethane resin in usage of synthetic leathers, artificial leathers, and the like which require flexibility.

In the present disclosure, as an index for a polymer that expresses such favorable physical properties and is excellent in mold processability, a ratio [$\eta_{1000}/\eta_1$] of a viscosity $\eta_{1000}$ at a shear rate of 1000 $s^{-1}$ and a temperature of

25°C to a viscosity $\eta_1$ at a shear rate of 1 $s^{-1}$ and a temperature of 25°C is employed. The technical significance of this viscosity ratio [$\eta_{1000}/\eta_1$] will be described. As shown in Fig. 2, the viscosity of a polymer decreases as the shear rate increases. However, if the viscosity is too low at a high shear rate, that is, if the viscosity ratio [$\eta_{1000}/\eta_1$] is too small, although the mold processability becomes favorable, the viscosity rapidly decreases at near a high shear rate. For this reason, it becomes difficult to estimate the amount of a polymer to be ejected during molding, so that the ejection stability sometimes decreases. On the other hand, if a decrease in viscosity at a high shear rate is too small, that is, if the viscosity ratio [$\eta_{1000}/\eta_1$] is near 1, although the viscosity stability is favorable, the viscosity does not sufficiently decrease. For this reason, the mold processability sometimes is inferior. Hence, in order to cause a polymer to express favorable physical properties and to balance favorable mold processability and favorable viscosity stability (ejection stability), it is considered that the viscosity ratio [$\eta_{1000}/\eta_1$] is preferably within a specific range.

In the polycarbonate diol of one aspect of the present disclosure, a ratio [$\eta_{1000}/\eta_1$] of a viscosity $\eta_{1000}$ at a shear rate of 1000 $s^{-1}$ and a temperature of 25°C to a viscosity $\eta_1$ at a shear rate of 1 $s^{-1}$ and a temperature of 25°C is preferably 0.40 to 0.80, more preferably 0.42 to 0.75, and further preferably 0.45 to 0.70. When the viscosity ratio [$\eta_{1000}/\eta_1$] is equal to or more than the lower limit, a rapid decrease in viscosity at a shear rate of near 1000 $s^{-1}$ can be suppressed, so that it tends to be easy to estimate the amount of polycarbonate diol to be ejected during molding. On the other hand, when the viscosity ratio [$\eta_{1000}/\eta_1$] is equal to or less than the upper limit, the viscosity sufficiently decreases at a shear rate of near 1000 $s^{-1}$, so that the mold processability tends to be superior.

In addition, the viscosity $\eta_1$ at a shear rate of 1 $s^{-1}$ and a temperature of 25°C of the polycarbonate diol of one aspect of the present disclosure is preferably 20000 to 80000 $mPa \cdot s^{-1}$, more preferably 25000 to 70000 $mPa \cdot s^{-1}$, and further preferably 30000 to 60000 $mPa \cdot s^{-1}$. The viscosity $\eta_1$ may be 35000 $mPa \cdot s^{-1}$ or more, 40000 $mPa \cdot s^{-1}$ or more, 45000 $mPa \cdot s^{-1}$ or more, 50000 $mPa \cdot s^{-1}$ or more, or 55000 $mPa \cdot s^{-1}$ or more, and may be 55000 $mPa \cdot s^{-1}$ or less, 50000 $mPa \cdot s^{-1}$ or less, 45000 $mPa \cdot s^{-1}$ or less, 40000 $mPa \cdot s^{-1}$ or less, or 37500 $mPa \cdot s^{-1}$ or less. When the viscosity $\eta_1$ is equal to or more than the lower limit, it tends to be easy to obtain a polycarbonate diol that expresses favorable physical properties. On the other hand, when the viscosity $\eta_1$ is equal to or less than the upper limit, it tends to be easy to obtain a polycarbonate diol that is excellent in mold processability.

Moreover, the viscosity $\eta_{1000}$ at a shear rate of 1000 $s^{-1}$ and a temperature of 25°C of the polycarbonate diol of one aspect of the present disclosure is preferably 10000 to 40000 $mPa \cdot s^{-1}$, more preferably 15000 to 35000 $mPa \cdot s^{-1}$, and further preferably 20000 to 30000 $mPa \cdot s^{-1}$. The viscosity $\eta_{1000}$ may be 22500 $mPa \cdot s^{-1}$ or more, 25000 $mPa \cdot s^{-1}$ or more, or 26000 $mPa \cdot s^{-1}$ or more, and may be 27000 $mPa \cdot s^{-1}$ or less, 26000 $mPa \cdot s^{-1}$ or less, 25000 $mPa \cdot s^{-1}$ or less, or 22500 $mPa \cdot s^{-1}$ or less. When the viscosity $\eta_{1000}$ is equal to or more than the lower limit, it tends to be easy to obtain a polycarbonate diol that is excellent in viscosity stability. On the other hand, when the viscosity $\eta_{1000}$ is equal to or less than the upper limit, it tends to be easy to obtain a polycarbonate diol that is excellent in mold processability.

<Method for Producing Polycarbonate Diol>

The polycarbonate diol of one aspect of the present disclosure can be obtained, for example, by reacting a carbonate compound and a diol compound in the presence of a transesterification catalyst. Specifically, the polycarbonate diol can be obtained by heating a mixture liquid containing a carbonate compound, a diol compound, and a transesterification catalyst to conduct reflux reaction (transesterification reaction) while removing, from the reaction system, an alcohol derived from the carbonate compound. Hence, the polycarbonate diol of one aspect of the present disclosure may contain a transesterification catalyst.

(Carbonate Compound)

The carbonate compound used for the production of the polycarbonate diol of one aspect of the present disclosure is not particularly limited, but includes, for example, an alkylene carbonate, a dialkyl carbonate, a diaryl carbonate, and the like.

The alkylene carbonate is not particularly limited, but includes, for example, ethylene carbonate, trimethylene carbonate, 1,2-propylene carbonate, 1,2-butylene carbonate, 1,3-butylene carbonate, 1,2-pentylene carbonate, and the like.

The dialkyl carbonate is not particularly limited, but includes, for example, dimethyl carbonate, diethyl carbonate, methylethyl carbonate, dipropyl carbonate, dibutyl carbonate, and the like.

The diaryl carbonate is not particularly limited, but includes, for example, diphenyl carbonate and the like.

Among these carbonate compounds, as the carbonate compound used for the production of the polycarbonate diol, an alkylene carbonate and a dialkyl carbonate are preferable, and ethylene carbonate, dimethyl carbonate, and diethyl carbonate are more preferable.

(Diol Compound)

The diol compound used for the production of the polycarbonate diol of one aspect of the present disclosure contains at least 1,6-hexanediol and/or 3-methyl-1,5-pentanediol.

In addition, the diol compound used for the production of the polycarbonate diol of one aspect of the present disclosure may contain another diol compound other than 1,6-hexanediol and 3-methyl-1,5-pentanediol. Such another diol compound is not particularly limited, but includes, for example, a linear diol other than 1,6-hexanediol, a branched diol other than 3-methyl-1,5-pentanediol, a cyclic diol, and a diol having an aromatic ring.

The linear diol other than 1,6-hexanediol is not particularly limited, but includes, for example, ethylene glycol, 1,3-propanediol, 1,4-butanediol, 1,5-pentanediol, 1,7-heptanediol, 1,8-octanediol, 1,9-nanodiol, 1,10-decanediol, 1,11-undecanediol, 1,12-dodecanediol, and the like.

The branched diol other than 3-methyl-1,5-pentanediol is not particularly limited, but includes, for example, 2-methyl-1,8-octanediol, neopentyl glycol, 2-ethyl-1,6-hexanediol, 2-methyl-1,3-propanediol, 2,4-dimethyl-1,5-pentanediol, 2,4-diethyl-1,5-pentanediol, and the like.

The cyclic diol is not particularly limited, but includes, for example, 1,3-cyclohexanediol, 1,4-cyclohexanediol, 1,4-cyclohexanedimethanol, 2-bis(4-hydroxycyclohexyl)-propane, and the like.

In the diol compound used for the production of the polycarbonate diol of one aspect of the present disclosure, a ratio of the number of moles of 1,6-hexanediol and/or 3-methyl-1,5-pentanediol (preferably, 1,6-hexanediol and 3-methyl-1,5-pentanediol) to the total number of moles of the diol compound is 0.90 to 1.00 and is preferably 0.95 to 1.00, and it is more preferable that all the diol compound be 1,6-hexanediol and/or 3-methyl-1,5-pentanediol (further preferably, 1,6-hexanediol and 3-methyl-1,5-pentanediol). When the ratio of 1,6-hexanediol and/or 3-methyl-1,5-pentanediol is within the above range, it tends to be easy to obtain a polycarbonate diol that has properties of liquid at 25°C and is excellent in mold processability and viscosity stability at 25°C.

In addition, a ratio of the number of moles of 3-methyl-1,5-pentanediol to the total number of moles of the diol compound is preferably 0.20 to 1.00, more preferably 0.30 to 0.99, further preferably 0.40 to 0.95, and particularly preferably 0.50 to 0.90. When the ratio is within the above range, the polycarbonate diol obtained has properties of liquid at 25°C and is excellent in handleability.

Moreover, a ratio of the number of moles of 3-methyl-1,5-pentanediol to the total number of moles of 3-methyl-1,5-pentanediol and 1,6-hexanediol is preferably 0.20 to 1.00, more preferably 0.30 to 0.99, further preferably 0.40 to 0.95, and particularly preferably 0.50 to 0.90. When the ratio is within the above range, the polycarbonate diol obtained has properties of liquid at 25°C and is excellent in handleability.

In the polycarbonate diol of one aspect of the present disclosure, a polyol compound having three or more hydroxy groups in one molecule, for example, trimethylolethane, trimethylolpropane, glycerin, pentaerythritol, or the like may be used as a raw material of the polycarbonate diol within a range that does not impair the performance. If this polyol compound having three or more hydroxy groups in one molecule is used as a raw material of the polycarbonate diol in too much amount, the polyol compound cross-links during the polymerization reaction of a polycarbonate to cause gelation. Hence, even in a case where a polyol compound having three or more hydroxy groups in one molecule is used as a raw material of the polycarbonate diol, the amount of this polyol compound is preferably 0.1 to 20 mol%, more preferably 0.5 to 15 mol%, further preferably 1 to 10 mol%, and particularly preferably 2 to 5 mol%, relative to the total number of moles of the diol compound used as a raw material of the polycarbonate diol.

The mixing ratio of the carbonate compound and the diol compound (the content of the carbonate compound in the mixture liquid/the content of the diol compound in the mixture liquid) is preferably 1/3 to 3/1, more preferably 1/2 to 2/1, further preferably 1/1.3 to 1.3/1, and particularly preferably 1/1.2 to 1.2/1, in molar ratio. When the mixing ratio of the carbonate compound and the diol compound is within the above range, it is possible to efficiently obtain the polycarbonate diol.

As the transesterification catalyst used in the production of the polycarbonate diol of one aspect of the present disclosure, lithium acetylacetonate is preferable. By using lithium acetylacetonate as the transesterification catalyst, it is possible to obtain the polycarbonate diol having a desired molecular weight distribution.

The content of the transesterification catalyst in the mixture liquid may be 0.0001 to 0.10 parts by mass, preferably 0.001 to 0.07 parts by mass, more preferably 0.002 to 0.04 parts by mass, further preferably 0.003 to 0.03 parts by mass, relative to the total amount of 100 parts by mass of the carbonate compound and the diol compound in the mixture liquid, from the viewpoint that a reaction temperature can be appropriately controlled and an increase in color number of the reaction product can be suppressed. When the content of the transesterification catalyst is equal to or more than the lower limit, it becomes easy to appropriately control the reaction temperature; however, it is preferable that the content of the transesterification catalyst be lesser from the viewpoint of facilitating the control of the reactivity of urethanization reaction in the case where the obtained polycarbonate diol is used as a raw material for the production of a polyurethane. In addition, when the content of the transesterification catalyst is equal to or less than the upper limit, it is possible to suppress an increase in color number of the reaction product and the reactivity of the urethanization

reaction.

The heating temperature of the mixture liquid (reaction temperature) is, for example, 0 to 250°C, and may be 100 to 220°C. When the reaction temperature is equal to or more than the lower limit, the transesterification reaction can easily proceed, and a desired polycarbonate diol can be easily obtained. When the reaction temperature is equal to or less than the upper limit, the color number of the obtained polycarbonate diol can be suppressed. In addition, the transesterification reaction may be conducted while the temperature is maintained at constant, or may be conducted while the temperature is increased stepwise or continuously in accordance with the extent of proceeding of the reaction. From the viewpoint of making it easier to obtain a desired polycarbonate diol, it is preferable to conduct heating at a temperature T1 that satisfies the relation of the following formula (α), and subsequently to conduct heating at a temperature T2 that satisfies the relation of the following formula (β). Note that it is preferable that the temperature T1 and the temperature T2 satisfy the relation of the following formula (γ). In addition, it is preferable that an average temperature $T1_m$ of the temperature of the first heating and an average temperature $T2_m$ of the temperature of the second heating satisfy the relation of the following formula (δ). Here, the extent of proceeding of the reaction can be estimated from the amount of a distillate distilled.

$$110°C \leq T1 < 140°C \quad ... (\alpha)$$

$$120°C \leq T2 < 140°C \quad ... (\beta)$$

$$T1 < T2 \quad ... (\gamma)$$

$$T1_m < T2_m \quad ... (\delta)$$

The heating of the mixture liquid may be conducted under ordinary pressure, but may also be conducted under reduced pressure (for example, under a pressure of 101 to 0.01 kPa) at the second half of the reaction. This increases the distillation rate of a distillate formed, and makes it possible to facilitate the progress of the reaction. Note that in the Specification, the ordinary pressure means a pressure of 101.325 kPa±20.000 kPa. From the viewpoint of making it easier to obtain a desired polycarbonate diol, it is preferable that the heating of the mixture liquid include heating under pressure of 101.325 kPa±20.000 kPa (first heating) and subsequently heating under reduced pressure of 0.05 kPa or less (second heating), it is more preferable that the temperature of the first heating be a temperature T1 that satisfies the relation of the above formula (α) and the temperature of the second heating be a temperature T2 that satisfies the relation of the above formula (β), and it is further preferable that the temperature of the first heating (temperature T1) and the temperature of the second heating (temperature T2) satisfy the relation of the above formula (γ). Moreover, from the viewpoint of making it easier to obtain a desired polycarbonate diol, it is preferable to distill an alcohol derived from the carbonate compound at a temperature near the boiling point of the alcohol or less (for example, ethanol derived from the diethyl carbonate at 79°C or less) to remove the alcohol from the reaction system.

(Urethane Resin)

The urethane resin according to one aspect of the present disclosure includes a reaction product of the above polycarbonate diol and an isocyanate. That is, the urethane resin is a polycondensation product of the above polycarbonate diol and an isocyanate or a cross-linkage product thereof. Here, the cross-linkage product means a product in which polycondensation products are cross-linked by a chain extender or the like.

(Polyisocyanate)

The polyisocyanate includes, for example, aromatic polyisocyanates, araliphatic polyisocyanates, aliphatic polyisocyanates, and alicyclic polyisocyanates. In addition, modified polyisocyanates which are modified products of these can also be used. The modified polyisocyanates include, for example, isocyanurate-modified polyisocyanates (trimers of isocyanates), allophanate-modified polyisocyanates, uretdione-modified polyisocyanates, urethane-modified polyisocyanates, biuret-modified polyisocyanates, uretonimine-modified polyisocyanates, acylurea-modified polyisocyanates, and the like. One of these may be used alone or two or more of these may be used in combination.

The aromatic isocyanates include, for example, 2,4-tolylene diisocyanate, 2,6-tolylene diisocyanate, a 2,4-tolylene diisocyanate/2,6-tolylene diisocyanate mixture, 4,4'-diphenylmethane diisocyanate, 2,4'-diphenylmethane diisocyanate, a 2,4'-diphenylmethane diisocyanate/4,4'-diphenylmethane diisocyanate mixture, m-xylylene diisocyanate, p-xylylene diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, and the like. Among these, 4,4'-diphenylmethane diisocyanate, 2,4'-diphenylmethane diisocyanate, and a 2,4'-diphenylmethane diisocyanate/4,4'-diphenylmethane diisocyanate mixture are preferable from the viewpoint of versatility.

The araliphatic isocyanates include, for example, 1,3-xylylene diisocyanate, 1,4-xylylene diisocyanate, and mixtures thereof; 1,3-bis(1-isocyanato-1-methylethyl)benzene, 1,4-bis(1-isocyanato-1-methylethyl)benzene, and mixtures thereof; w,w'-diisocyanato-1,4-diethylbenzene, and the like.

The aliphatic isocyanates include, for example, hexamethylene diisocyanate, pentamethylene diisocyanate, tetramethylene diisocyanate, 2-methylpentane-1,5-diisocyanate, 3-methylpentane-1,5-diisocyanate, lysine diisocyanate, trioxyethylene diisocyanate, ethylene diisocyanate, trimethylene diisocyanate, octamethylene diisocyanate, nonamethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanate-4-(isocyanatomethyl)octane, 2,5,7-trimethyl-1,8-diisocyanate-5-(isocyanatomethyl)octane, bis(isocyanatoethyl)carbonate, bis(isocyanatoethyl)ether, 1,4-butylene glycol dipropyl ether-$\alpha,\alpha'$-diisocyanate, lysine diisocyanatomethyl ester, 2-isocyanatoethyl-2,6-diisocyanate hexanoate, 2-isocyanatopropyl-2,6-diisocyanate hexanoate, and the like. Among these, hexamethylene diisocyanate, pentamethylene diisocyanate, and tetramethylene diisocyanate are preferable from the viewpoint of versatility.

The alicyclic isocyanates include, for example, isophorone diisocyanate, cyclohexyl diisocyanate, bis(isocyanatomethyl)cyclohexane, dicyclohexylmethane diisocyanate, methylcyclohexyl diisocyanate, dicyclohexyldimethylmethane diisocyanate, 2,2'-dimethyldicyclohexylmethane diisocyanate, bis(4-isocyanate-n-butylidene)pentaerythritol, hydrogenated dimer acid diisocyanate, 2-isocyanatomethyl-3-(3-isocyanatopropyl)-5-(isocyanatomethyl)bicyclo[2.2.1]heptane, 2-(isocyanatomethyl)-3-(3-isocyanatopropyl)-6-(isocyanatomethyl)-bicyclo[2.2.1]heptane, 2-(isocyanatomethyl)-2-(3-isocyanatopropyl)-5-(isocyanatomethyl)bicyclo[2.2.1]heptane, 2-(isocyanatomethyl)-2-(3-isocyanatopropyl)-6-(isocyanatomethyl)bicyclo[2.2.1]heptane, 2-(isocyanatomethyl)-3-(3-isocyanatopropyl)-5-(2-isocyanatoethyl)bicyclo[2.2.1]heptane, 2-(isocyanatomethyl)-3-(3-isocyanatopropyl)-6-(2-isocyanatoethyl)bicyclo[2.2.1]heptane, 2-(isocyanatomethyl)-2-(3-isocyanatopropyl)-5-(2-isocyanatoethyl)bicyclo[2.2.1]heptane, 2-(isocyanatomethyl)-2-(3-isocyanatopropyl)-6-(2-isocyanatoethyl)bicyclo[2.2.1]heptane, 2,5-bis(isocyanatomethyl)bicyclo[2.2.1]heptane, hydrogenated diphenylmethane diisocyanate, norbornane diisocyanate, hydrogenated tolylene diisocyanate, hydrogenated xylene diisocyanate, hydrogenated tetramethylxylene diisocyanate, and the like. Among these, isophorone diisocyanate and hydrogenated diphenylmethane diisocyanate are preferable from the viewpoint of versatility.

(Chain Extender)

A chain extender can be selected as appropriated in accordance with the object, the usage, and the like. The chain extender includes, for example, water; low-molecular polyols such as ethylene glycol, 1,3-propanediol, 1,4-butanediol, 1,5-pentanediol, 1,6-hexanediol, neopentyl glycol, 1,10-decanediol, 1,1-cyclohexanedimethanol, 1,4-cyclohexanedimethanol, tricyclodecanedimethanol, xylylene glycol, bis(p-hydroxy)diphenyl, bis(p-hydroxyphenyl)propane, 2,2-bis[4-(2-hydroxyethoxy)phenyl]propane, bis[4-(2-hydroxyethoxy)phenyl]sulfone, and 1,1-bis[4-(2-hydroxyethoxy)phenyl]cyclohexane; high-molecular polyols such as polyester polyol, polyester amide polyol, polyether polyol, polyether ester polyol, polycarbonate polyol, and polyolefin polyol; polyamines such as ethylenediamine, isophoronediamine, 2-methyl-1,5-pentandiamine, aminoethylethanolamine, diethylenetriamine, triethylenetetramine, tetraethylenepentamine, and pentaethylenehexamine, and the like. The amount of the chain extender to be blended (the ratio of the structure derived from the chain extender to be contained in the urethane resin) may be 0.1 to 50 parts by mass relative to the total amount of 100 parts by mass of the polycarbonate diol and the isocyanate. Note that when the chain extender is a polyol, the content of the polyol is calculated as being contained in both of the chain extender and polyol components.

(Coating Agent)

The coating agent according to one aspect of the present disclosure includes the above urethane resin. Specific aspects of the urethane resin may be as described above.

[Examples]

Hereinafter, Examples of the present invention will be described, but the present invention is not limited to these Examples. Note that analysis and evaluation of polycarbonate diols obtained was conducted by the following

methods.

[Evaluation of properties]

The obtained polycarbonate diols were heated at 80°C for 1 hour and were left to stand at 25°C for 3 days. The states of the samples after being left to stand were visually observed to determine that a sample was "liquid" when there was even slight fluidity at ordinary temperature (25°C) and that a sample was "solid" when there was no fluidity at ordinary temperature (25°C).

[Measurement of Number Average Molecular Weights by using GPC]

A GPC analysis was conducted on the obtained polycarbonate diols under the following conditions to measure the number average molecular weights of the polycarbonate diols.

- Conditions -

(1) Measuring instrument: HLC-8420 (manufactured by Tosoh Corporation)
(2) Column: TSKgel (manufactured by Tosoh Corporation)

- G3000H-XL
- G3000H-XL
- G2000H-XL
- G2000H-XL

(3) Mobile phase: THF (tetrahydrofuran)
(4) Detector: RI (refractive index) detector (attached to HLC-8420)
(5) Temperature: 40°C
(6) Flow speed: 1.000 ml/min
(7) Calibration curves: The calibration curves were obtained by using the following products (all of which are bifunctional polyoxypropylene polyols produced by Sanyo Chemical Industries, Ltd.).

- "SANNIX PP-200" (the number average molecular weight=200, and the average number of functional groups: 2)
- "SANNIX PP-400" (the number average molecular weight=400, and the average number of functional groups: 2)
- "SANNIX PP-1000" (the number average molecular weight=1000, and the average number of functional groups:

    2)

    - "SANNIX PP-2000" (the number average molecular weight=2000, and the average number of functional groups:

    2)

    - "SANNIX PP-3000" (the number average molecular weight=3200, and the average number of functional groups:

    2)

    - "SANNIX PP-4000" (the number average molecular weight=4160, and the average number of functional groups: 2)

(8) Approximation formula of the calibration curves: the third formula
(9) Sample solution concentration: 0.5% by mass THF solution

[Measurement of Hydroxyl Value]

The hydroxyl values of the obtained polycarbonate diols were measured by a method using an acetylating

reagent in compliance with JIS K1557-1.

[Calculation of number average molecular weights from hydroxyl values]

The number average molecular weights of the obtained polycarbonate diols were calculated from the hydroxyl values in accordance with the following formula. Note that the number average molecular weights calculated from the hydroxyl values correspond to the absolute molecular weights (true molecular weights) of the polymers.

The number average molecular weight [g/mol] calculated from the hydroxyl value = 2×56.11 [KOH g/mol]×1000/hydroxyl value [KOH mg/g].

[LC Measurement]

A liquid chromatography (LC) measurement was conducted on the obtained polycarbonate diols under the following conditions to obtain an LC spectrum of each polycarbonate diol.

- Conditions -

(1) Measuring instrument: Agilent 1290 Infinity II series (manufactured by Agilemt Technologies)
(2) Column: TSKgel (manufactured by Tosoh Corporation)

- TSKgel ODS-100V (4.6 mmI.D.×15cm)

(3) Mobile phase:

A liquid: water/methanol=5/5 (vol/vol%)
B liquid: tetrahydrofuran (THF)
Water: purified water
THF: produced for HPLC by FUJIFILM Wako Pure Chemical Corporation
Methanol: produced for HPLC by FUJIFILM Wako Pure Chemical Corporation

(4) Pretreatment
The obtained polycarbonate diol was weighed, and a predetermined mobile phase (B liquid) was added, and the polycarbonate diol was left to stand overnight at room temperature to dissolve. A sample solution obtained was gently shaken up, and was filtrated by using a PTFE cartridge filter of 0.45 um.
(5) Solvent gradient conditions
Solvent gradient conditions were set to conditions shown in Table 1.

[Table 1]

[Table 1]

| Time [min] | A liquid [v/v%] | B liquid [v/v%] |
|---|---|---|
| 0 | 90 | 10 |
| 5 | 90 | 10 |
| 10 | 60 | 40 |
| 55 | 0 | 100 |
| 62 | 0 | 100 |

(continued)

| Time [min] | A liquid [v/v%] | B liquid [v/v%] |
|---|---|---|
| 62.1 | 90 | 10 |

(6) Detector: Evaporative light scattering detector (ELSD) G4260B (manufactured by Agilent Technologies)
(7) Temperature: 40°C
(8) Flow speed: 0.40 ml/min
(9) Injection volume: 15 $\mu$L
(10) Sample solution concentration (THF): 2.0 mg/L

Note that the molecular structure of each peak of the obtained LC spectrum was identified by conducting MS measurement (apparatus: Bruker Daltonics microTOF, ion source: APCI, measurement mode: positive mode) on each peak alone.

[Calculation of Peak Area Value Ratio]

In the obtained LC spectrum, a peak of molecular weight closest to the number average molecular weight (absolute molecular weight) calculated from the hydroxyl value was determined, and the number of repeating units $X_0$ of the polycarbonate diol (D) corresponding to this peak was obtained. Note that the "peak of molecular weight closest to the number average molecular weight calculated from the hydroxyl value" is defined as a peak of molecular weight having the smallest absolute value of difference from the number average molecular weight calculated from the hydroxyl value. Note that in the case where there were two peaks of molecular weight each having the smallest absolute value of difference from the number average molecular weight calculated from the hydroxyl value of the polycarbonate diol, a peak of the smaller molecular weight was employed. Next, in the LC spectrum, an area value S(X) of each peak [X represents the number of repeating units of the polycarbonate diol (D), and X=... , $X_0$-2, $X_0$-1, $X_0$, $X_0$+1, $X_0$+2, ...] was obtained, and each peak area value ratio [S(X)/S($X_0$)] to the area value S($X_0$) of the peak at which the number of repeating units is $X_0$ was calculated. Moreover, the number of consecutive peaks at each of which the area value ratio[S(X)/S($X_0$)] was within a range of 0.90 to 1.10, including the peak at which the number of repeating units is $X_0$, was obtained.

[Measurement of Viscosity]

The viscosity of the obtained polycarbonate diol was measured under the following conditions in compliance with 10 "Viscosity measuring method using cone-plate rotational viscometer" of JIS Z 8803:2011. Specifically, a cone and plate viscometer (HAAKE MARS Modular Advanced Rheometer System: manufactured by Thermo Scientific) was used, 0.20 $cm^3$ of each polycarbonate diol was placed between the circular plate and the cone, and the cone was rotated at a predetermined shear rate. After the elapse of 5 minutes, a torque that the circular plate or the cone received when a constant state was reached was measured, and the viscosity of the polycarbonate diol was calculated.

- Conditions -

(1) Rotor: a rotor manufactured by Thermo scientific (type (product number): C25 1°/Ti, diameter: 25.00 mm, an angle made by the circular plate and the cone (cone angle: $\alpha$): 1°)
(2) Shear rate: 1 $s^{-1}$ or 1000 $s^{-1}$
(3) Measurement temperature: 25°C

(Example 1)

In a 1L two-neck glass reactor (reactor A) incorporating an agitator, a thermometer, a heating device and a cooler, 49.5 g of 1,6-hexanediol, 445.4 g of 3-methyl-1,5-pentanediol, 505.1 g of diethyl carbonate, and 0.050 g of lithium acetylacetonate were mixed. The obtained mixture liquid was heated at 110 to 138°C (initially 110°C, and finally 138°C) under ordinary pressure to be allowed to react for 8 hours while removing low-boiling point components (alcohol and the like derived from carbonic acid ester). The distillate temperature was set to 77°C or more and less than 79°C. Moreover, the pressure in the flask was gradually reduced to 0.04 kPa at a reaction temperature of 138°C, followed by further reaction for 8 hours to obtain a polycarbonate diol (PCD-1) which was liquid at ordinary temperature.

(Example 2)

A polycarbonate diol (PCD-2) which was liquid at ordinary temperature was obtained in the same manner as in Example 1 except that a mixture liquid obtained by mixing 99.0 g of 1,6-hexanediol, 99.0 g of 3-methyl-1,5-pentanediol, 202.0 g of diethyl carbonate, and 0.020 g of lithium acetylacetonate in the reactor A was used.

(Example 3)

A polycarbonate diol (PCD-3) which was liquid at ordinary temperature was obtained in the same manner as in Example 1 except that a mixture liquid obtained by mixing 59.4 g of 1,6-hexanediol, 138.6 g of 3-methyl-1,5-pentanediol, 202.0 g of diethyl carbonate, and 0.020 g of lithium acetylacetonate in the reactor A was used.

(Comparative Example 1)

A polycarbonate diol (PCD-7) which was liquid at ordinary temperature was obtained in the same manner as in Example 1 except that a mixture liquid obtained by mixing 96.8 g of 1,6-hexanediol, 871.3 g of 3-methyl-1,5-pentanediol, 1031.9 g of diethyl carbonate, and 0.100 g of lithium acetylacetonate in the reactor A was used.

(Comparative Example 2)

In the reactor A, 46.7 g of 1,6-hexanediol, 420.2 g of 3-methyl-1,5-pentanediol, 433.1 g of diethyl carbonate, and 0.027 g of tetrabutyl titanate were mixed. The obtained mixture liquid was heated at 120 to 190°C (initially 120°C, and finally 190°C) under ordinary pressure to be allowed to react for 8 hours while removing low-boiling point components (alcohol and the like derived from carbonic acid ester). The distillate temperature was set to 77°C or more and less than 79°C. Moreover, the pressure in the flask was gradually reduced to 0.5 kPa at a reaction temperature of 190°C, followed by further reaction for 8 hours to obtain a polycarbonate diol (PCD-8) which was liquid at ordinary temperature.

(Comparative Example 3)

A polycarbonate diol (PCD-9) which was liquid at ordinary temperature was obtained in the same manner as in Comparative Example 2 except that a mixture liquid obtained by mixing 52.6 g of 1,6-hexanediol, 473.4 g of 3-methyl-1,5-pentanediol, 374.0 g of diethyl carbonate, and 0.027 g of tetrabutyl titanate in the reactor A was used.

(Comparative Example 4)

A polycarbonate diol (PCD-10) which was liquid at ordinary temperature was obtained in the same manner as in Example 1 except that a mixture liquid obtained by mixing 52.6 g of 1,6-hexanediol, 473.4 g of 3-methyl-1,5-pentanediol, 374.0 g of diethyl carbonate, and 0.045 g of lithium acetylacetonate in the reactor A was used.

(Comparative Example 5)

A polycarbonate diol (PCD-11) which was liquid at ordinary temperature was obtained in the same manner as in Example 1 except that a mixture liquid obtained by mixing 59.9 g of 1,6-hexanediol, 539.5 g of 3-methyl-1,5-pentanediol, 300.5 g of diethyl carbonate, and 0.045 g of lithium acetylacetonate in the reactor A was used.

(Example 4)

A polycarbonate diol (PCD-4) was obtained by mixing 67 g of PCD-7 obtained in Comparative Example 1 and 33 g of PCD-8 obtained in Comparative Example 2 at 40°C.

(Example 5)

A polycarbonate diol (PCD-5) was obtained by mixing 89 g of PCD-1 obtained in Example 1 and 11 g of PCD-11 obtained in Comparative Example 5 at 40°C.

(Example 6)

A polycarbonate diol (PCD-6) was obtained by mixing 80 g of PCD-1 obtained in Example 1 and 20 g of PCD-10 obtained in Comparative Example 4 at 40°C.

(Comparative Example 6)

A polycarbonate diol (PCD-12) was obtained by mixing 67 g of PCD-7 obtained in Comparative Example 1 and 33 g of PCD-11 obtained in Comparative Example 5 at 40°C.

(Comparative Example 7)

A polycarbonate diol (PCD-13) was obtained by mixing 25 g of PCD-10 obtained in Comparative Example 4 and 25 g of PCD-11 obtained in Comparative Example 5 at 40°C.

(Comparative Example 8)

A polycarbonate diol (PCD-14) was obtained by mixing 86 g of PCD-7 obtained in Comparative Example 1 and 14 g of PCD-10 obtained in Comparative Example 4 at 40°C.

(Comparative Example 9)

A polycarbonate diol (PCD-15) was obtained by mixing 67 g of PCD-1 obtained in Example 1 and 33 g of PCD-10 obtained in Comparative Example 4 at 40°C.

(Comparative Example 10)

A polycarbonate diol (PCD-16) was obtained by mixing 80 g of PCD-7 obtained in Comparative Example 1 and 20 g of PCD-8 obtained in Comparative Example 2 at 40°C.

Properties at ordinary temperature (25°C), the number average molecular weight measured by GPC, the hydroxyl value, the number average molecular weight calculated from the hydroxyl value, the number of repeating units $X_0$ of the polycarbonate diol (D) corresponding to the peak of molecular weight closest to the number average molecular weight calculated from the hydroxyl value, each peak area value ratio $[S(X)/S(X_0)]$ to the area value $S(X_0)$ of the peak at which the number of repeating units is $X_0$, and the number of consecutive peaks at which the area value ratio $[S(X)/S(X_0)]$ is within a predetermined range, including the peak at which the number of repeating units is $X_0$, measured for each of the polycarbonate diols obtained in Examples 1 to 6 and Comparative Examples 1 to 10 in accordance with the above methods, are shown in Tables 2 to 3. In addition, the LC spectrum of the polycarbonate diol (PCD-8) obtained in Comparative Example 2 is shown in Fig. 1 as reference.

[Table 2]

| | | | Ex 1 | Ex 2 | Ex 3 | Ex 4 | Ex 5 | Ex 6 |
|---|---|---|---|---|---|---|---|---|
| Composition | | | PCD-1 | PCD-2 | PCD-3 | PCD-4 | PCD-5 | PCD-6 |
| Blend | Diol compound [g] | 1,6-Hexanediol | 49.5 | 99.0 | 59.4 | | | |
| | | 3-Methyl-1,5-pentanediol | 445.4 | 99.0 | 138.6 | | | |
| | Carbonate compound [g] | Diethyl carbonate | 505.1 | 202.0 | 202.0 | | | |
| | Catalyst [g] | Lithium acetylacetonate | 0.050 | 0.020 | 0.020 | | | |
| | | Tetrabutyl titanate | | | | | | |
| | Polycarbonate diol [g] | PCD-1 | | | | | 89 | 80 |
| | | PCD-7 | | | | 67 | | |
| | | PCD-8 | | | | 33 | | |
| | | PCD-10 | | | | | | 20 |
| | | PCD-11 | | | | | 11 | |

(continued)

| | | | | Ex 1 | Ex 2 | Ex 3 | Ex 4 | Ex 5 | Ex 6 |
|---|---|---|---|---|---|---|---|---|---|
| Analysis and evaluation | Property at 25°C | | | Liquid | Liquid | Liquid | Liquid | Liquid | Liquid |
| | Number average molecular weight measured by GPC [g/mol] | | | 1679 | 1532 | 1652 | 1457 | 1164 | 1149 |
| | Hydroxyl value [mgKOH/g] | | | 52.8 | 70.2 | 63.8 | 67.5 | 99.1 | 94.6 |
| | Number average molecular weight calculated from hydroxyl value [g/mol] | | | 2125 | 1599 | 1759 | 1663 | 1132 | 1186 |
| | Composition analysis by LC measurement | $X_0$ | | 15 | 11 | 12 | 12 | 8 | 8 |
| | | Area value ratio $S(X)/S(X_0)$ | $S(X_0-5)/S(X_0)$ | 0.52 | 0.77 | 0.77 | 1.15 | 1.61 | 1.33 |
| | | | $S(X_0-4)/S(X_0)$ | 0.58 | 0.85 | 0.86 | 1.25 | 1.28 | 1.49 |
| | | | $S(X_0-3)/S(X_0)$ | 0.64 | 0.88 | 0.84 | 1.06 | 0.99 | 1.32 |
| | | | $S(X_0-2)/S(X_0)$ | 0.78 | 0.91 | 0.87 | 0.97 | 0.82 | 1.09 |
| | | | $S(X_0-1)/S(X_0)$ | 0.97 | 0.95 | 0.94 | 1.04 | 0.94 | 1.08 |
| | | | $S(X_0)/S(X_0)$ | 1.00 | 1.00 | 1.00 | 1.00 | 1.00 | 1.00 |
| | | | $S(X_0+1)/S(X_0)$ | 0.95 | 1.06 | 1.07 | 1.09 | 0.85 | 0.80 |
| | | | $S(X_0+2)/S(X_0)$ | 0.92 | 1.14 | 1.13 | 1.28 | 0.79 | 0.72 |
| | | | $S(X_0+3)/S(X_0)$ | 0.97 | 1.19 | 1.15 | 1.24 | 0.88 | 0.69 |
| | | | $S(X_0+4)/S(X_0)$ | 1.05 | 1.18 | 1.17 | 1.03 | 0.95 | 0.69 |
| | | | $S(X_0+5)/S(X_0)$ | 1.11 | 1.21 | 1.21 | 0.95 | 1.18 | 0.78 |
| | | The number of consecutive peaks at each of which $S(X)/S(X_0)$ is 0.90 to 1.10 | | 6 | 4 | 3 | 5 | 2 | 3 |

[Table 3]

| | | | | Comp. Ex 1 | Comp. Ex 2 | Comp. Ex. 3 | Comp. Ex. 4 | Comp. Ex 5 | Comp. Ex 6 | Comp. Ex. 7 | Comp. Ex. 8 | Comp. Ex 9 | Comp. Ex 10 |
|---|---|---|---|---|---|---|---|---|---|---|---|---|---|
| Composition | | | | PCD-7 | PCD-8 | PCD-9 | PCD-10 | PCD-11 | PCD-12 | PCD-13 | PCD-14 | PCD-15 | PCD-16 |
| Blend | Diol compound [g] | 1,6-Hexanediol | | 96.8 | 46.7 | 52.6 | 52.6 | 59.9 | | | | | |
| | | 3-Methyl-1,5-pentanediol | | 871.3 | 420.2 | 473.4 | 473.4 | 539.5 | | | | | |
| | Carbonate compound [g] | Diethyl carbonate | | 1031.9 | 433.1 | 374.0 | 374.0 | 300.5 | | | | | |
| | Catalyst [g] | Lithium acetylacetonate | | 0.100 | | | 0.045 | 0.045 | | | | | |
| | | Tetrabutyl titanate | | | 0.027 | 0.027 | | | | | | | |
| | Polycarbonate diol [g] | PCD-1 | | | | | | | | | | 67 | |
| | | PCD-7 | | | | | | | 67 | | 86 | | 80 |
| | | PCD-8 | | | | | | | | | | | 20 |
| | | PCD-10 | | | | | | | | 25 | 14 | 33 | |
| | | PCD-11 | | | | | | | 33 | 25 | | | |
| | Property at 25°C | | | Liquid | Liquid | Liquid | Liquid | Liquid | Liquid | Liquid | Liquid | Liquid | Liquid |
| | Number average molecular weight measured by GPC [g/mol] | | | 1901 | 1010 | 560 | 515 | 324 | 720 | 400 | 1682 | 1005 | 1691 |
| | Hydroxyl value [mgKOH/g] | | | 37.4 | 112.1 | 224.4 | 261.4 | 458.3 | 174.6 | 359.5 | 64.1 | 112.2 | 52.4 |
| | Number average molecular weight calculated from hydroxyl value [g/mol] | | | 3001 | 1000 | 500 | 429 | 245 | 643 | 312 | 1750 | 998 | 2143 |
| | | $X_0$ | | - | 7 | 4 | 3 | - | 5 | 3 | 12 | 7 | 15 |
| | | | $S(X_0-5)/S(X_0)$ | - | - | - | - | - | - | - | 1.34 | - | 0.88 |
| | | | $S(X_0-4)/S(X_0)$ | - | 0.59 | - | - | - | - | - | 1.25 | 1.37 | **0.97** |
| | | | $S(X_0-3)/S(X_0)$ | - | **0.90** | - | - | - | - | - | **1.10** | 1.54 | **0.96** |

(continued)

| | | | | Comp. Ex 1 | Comp. Ex 2 | Comp. Ex. 3 | Comp. Ex. 4 | Comp. Ex 5 | Comp. Ex 6 | Comp. Ex. 7 | Comp. Ex. 8 | Comp. Ex 9 | Comp. Ex 10 |
|---|---|---|---|---|---|---|---|---|---|---|---|---|---|
| Analysis and evaluation | Composition analysis by LC measurement | Area value ratio $S(X)/S(X_0)$ | $S(X_0-2)/S(X_0)$ | - | **0.98** | - | - | - | 5.41 | - | **1.08** | 1.38 | **0.98** |
| | | | $S(X_0-1)/S(X_0)$ | - | **0.98** | 0.89 | - | - | 2.54 | - | **1.09** | 1.12 | **1.01** |
| | | | $S(X_0)/S(X_0)$ | **1.00** | **1.00** | **1.00** | **1.00** | **1.00** | **1.00** | **1.00** | **1.00** | **1.00** | **1.00** |
| | | | $S(X_0+1)/S(X_0)$ | - | **1.01** | 0.79 | 0.89 | - | 0.33 | 0.68 | **1.01** | 0.88 | **1.03** |
| | | | $S(X_0+2)/S(X_0)$ | - | **1.00** | 0.60 | 0.68 | - | 0.16 | 0.36 | **1.04** | 0.76 | **1.07** |
| | | | $S(X_0+3)/S(X_0)$ | - | **0.98** | 0.45 | 0.47 | - | 0.10 | 0.20 | **1.00** | 0.67 | **1.08** |
| | | | $S(X_0+4)/S(X_0)$ | - | **0.96** | 0.33 | 0.31 | - | 0.09 | 0.11 | **1.04** | 0.63 | 1.11 |
| | | | $S(X_0+5)/S(X_0)$ | - | 0.87 | 0.24 | 0.21 | - | 0.09 | 0.07 | **1.10** | 0.55 | 1.05 |
| | | The number of consecutive peaks at each of which $S(X)/S(X_0)$ is 0.90 to 1.10 | | 1 | 8 | 1 | 1 | 1 | 1 | 1 | 9 | 1 | 8 |

The viscosity (25°C) [$\eta_1$ and $\eta_{1000}$] at a shear rate of 1 $s^{-1}$ or 1000 $s^{-1}$, measured for each of the polycarbonate diols obtained in Examples 1 to 6 and Comparative Examples 1 to 10 in accordance with the above method as well as the ratio [$\eta_{1000}/\eta_1$] of the viscosity (25°C) $\eta_{1000}$ at the shear rate of 1000 $s^{-1}$ to the viscosity (25°C) $\eta_1$ at the shear rate of 1 $s^{-1}$ are shown in Tables 4 to 5.

[Table 4]

| | | Ex. 1 | Ex. 2 | Ex. 3 | Ex 4 | Ex. 5 | Ex. 6 |
|---|---|---|---|---|---|---|---|
| Analysis and evaluation | The number of consecutive peaks at each of which $S(X)/S(X_0)$ is 0.90 to 1.10 | 6 | 4 | 3 | 5 | 2 | 3 |
| Property evaluation | $\eta_1$ | 46457 | 53703 | 60531 | 61117 | 26332 | 26336 |
| | $\eta_{1000}$ | 30192 | 25614 | 28350 | 24621 | 20001 | 19432 |
| | $\eta_{1000}/\eta_1$ | 0.65 | 0.48 | 0.47 | 0.40 | 0.76 | 0.74 |
| $\eta_1$: Viscosity (25°C) at shear rate of 1 $s^{-1}$ [mPa ▪ s]<br>$\eta_{1000}$ :Viscosity (25°C) at shear rate of 1000 $s^{-1}$ [mPa ▪ s] | | | | | | | |

[Table 5]

| | | Comp. Ex. 1 | Comp. Ex 2 | Comp. Ex. 3 | Comp. Ex 4 | Comp. Ex. 5 | Comp. Ex. 6 | Comp. Ex 7 | Comp. Ex. 8 | Comp. Ex 9 | Comp. Ex. 10 |
|---|---|---|---|---|---|---|---|---|---|---|---|
| Analysis and evaluation | The number of consecutive peaks at each of which $S(X)/S(X_0)$ is 0.90 to 1.10 | 1 | 8 | 1 | 1 | 1 | 1 | 1 | 9 | 1 | 8 |
| Property evaluation | $\eta_1$ | 174321 | 8609 | 1570 | 1093 | 395 | 58377 | 616 | 51236 | 16216 | 88258 |
| | $\eta_{1000}$ | 34864 | 7649 | 1477 | 1076 | 338 | 2175 | 518 | 20042 | 13119 | 22064 |
| | $\eta_{1000}/\eta_1$ | 0.20 | 0.89 | 0.94 | 0.98 | 0.85 | 0.04 | 0.84 | 0.39 | 0.81 | 0.25 |

$\eta_1$ : Viscosity (25°C) at shear rate of 1 s' [mPa ▪ s]

$\eta_{1000}$ : Viscosity (25°C) at shear rate of 1000 $s^{-1}$ [mPa ▪ s]

As described above, the present disclosure makes it possible to obtain a polycarbonate diol that balances mold processability and viscosity stability at 25°C. In addition, the polycarbonate diol of one aspect of the present disclosure can form a surface-treatment layer or a coating film that is excellent in wear resistance and has favorable resistance to moist heat and resistance to perspiration.

Therefore, the polycarbonate diol of one aspect of the present disclosure is useful as a constituent material of a surface-treatment agent that is capable of stably forming a surface-treatment layer having the above-described properties on a synthetic leather or an artificial leather and of a coating agent that is capable of stably forming a coating film having the above-described properties on a film.

A polycarbonate diol having a repeating unit (A) of a carbonate structure, and containing terminal hydroxyl groups, wherein

90 to 100 mol% of the repeating unit (A) is a repeating unit (B) of a 3-methylpentan-1,5-diyl group-containing carbonate structure and/or a repeating unit (C) of a 1,6-hexanediyl group-containing carbonate structure,
the polycarbonate diol contains a polycarbonate diol (D) represented by the following formula (D),
a number average molecular weight calculated from a hydroxyl value of the polycarbonate diol is 300 to 2800 g/mol, and
in an LC spectrum measured for the polycarbonate diol, when $X_0$ represents the number of repeating units of the polycarbonate diol (D) corresponding to a peak of molecular weight closest to the above number average molecular weight, the number of consecutive peaks at each of which a peak area value ratio to an area value of the peak at which the number of repeating units is $X_0$ is 0.90 to 1.10 is 2 to 7, including the peak at which the number of repeating units is $X_0$,

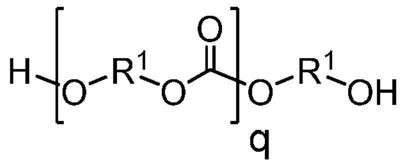

(D)

wherein $R^1$ represents - $(CH_2)_6$- or $-CH_2CH_2CH(CH_3)CH_2CH_2-$.

## Claims

1. A polycarbonate diol comprising a repeating unit (A) represented by the following formula (A), and containing terminal hydroxyl groups, wherein

   90 to 100 mol% of the repeating unit (A) is a repeating unit (B) represented by the following formula (B) and/or a repeating unit (C) represented by the following formula (C),
   the polycarbonate diol contains a polycarbonate diol (D) represented by the following formula (D),
   a number average molecular weight calculated from a hydroxyl value of the polycarbonate diol is 300 to 2800 g/mol, and
   in an LC spectrum measured for the polycarbonate diol, when $X_0$ represents the number of repeating units of the polycarbonate diol (D) corresponding to a peak of molecular weight closest to the number average molecular weight calculated from the hydroxyl value of the polycarbonate diol, the number of consecutive peaks at each of which a peak area value ratio to an area value of the peak at which the number of repeating units is $X_0$ is 0.90 to 1.10 is 2 to 7, including the peak at which the number of repeating units is $X_0$,

   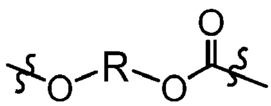

   (A)

   where in the formula (A), R represents a divalent aliphatic or alicyclic hydrocarbon group having 2 to 15 carbon atoms,

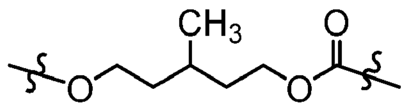

(B),

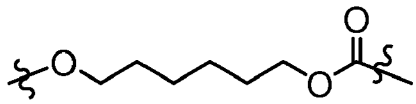

(C),

and

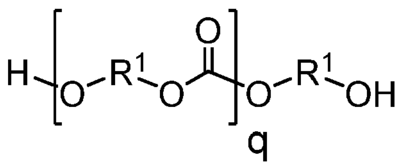

(D)

where in the formula (D), $R^1$ represents *-$(CH_2)_6$-* or *-$CH_2CH_2CH(CH_3)CH_2CH_2$-*,
* at both ends in the formulas represents binding sites with two oxygen atoms bound to both ends of $R^1$,
q represents an integer of 1 or more, and the plurality of $R^1$ may be the same or different.

**2.** The polycarbonate diol according to claim 1, wherein
an amount of the repeating unit (B) is 20 to 100 mol% to a total amount of the repeating unit (A).

**3.** The polycarbonate diol according to claim 1 or 2, wherein
an amount of the repeating unit (B) is 20 to 100 mol% to a total amount of the repeating unit (B) and the repeating unit (C).

**4.** The polycarbonate diol according to any one of claims 1 to 3, wherein
all of the repeating unit (A) is the repeating unit (B) and/or the repeating unit (C).

**5.** The polycarbonate diol according to any one of claims 1 to 4, wherein
90 to 100 mol% of the polycarbonate diol is the polycarbonate diol (D).

**6.** The polycarbonate diol according to any one of claims 1 to 5, wherein
a ratio $\eta_{1000}/\eta_1$ of a viscosity $\eta_{1000}$ at a shear rate of 1000 $s^{-1}$ and a temperature of 25°C to a viscosity $\eta_1$ at a shear rate of 1 $s^{-1}$ and a temperature of 25°C is 0.40 to 0.80.

**7.** A urethane resin comprising:
a reaction product of the polycarbonate diol according to any one of claims 1 to 6 and an isocyanate.

**8.** A coating agent comprising:
the urethane resin according to claim 7.

*Fig. 1*

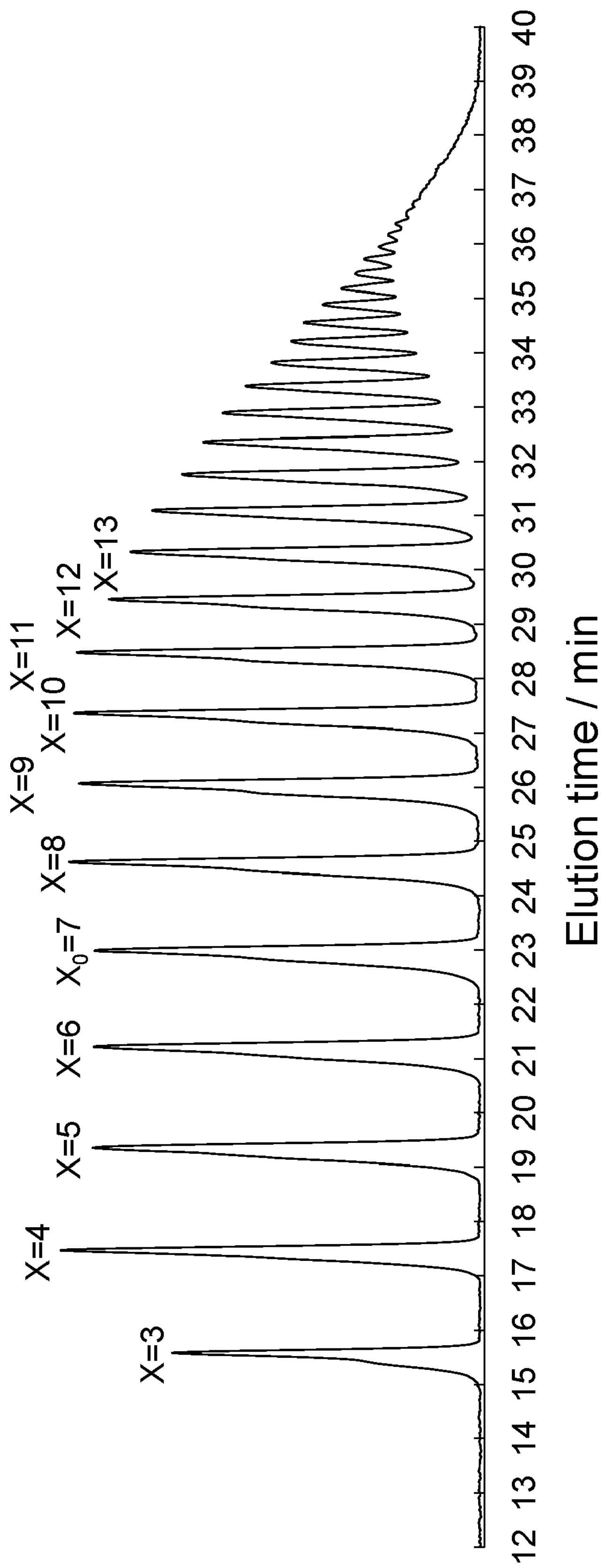
X=3
X=4
X=5
X=6
X₀=7
X=8
X=9
X=10
X=11
X=12
X=13
12 13 14 15 16 17 18 19 20 21 22 23 24 25 26 27 28 29 30 31 32 33 34 35 36 37 38 39 40
Elution time / min

Fig. 2

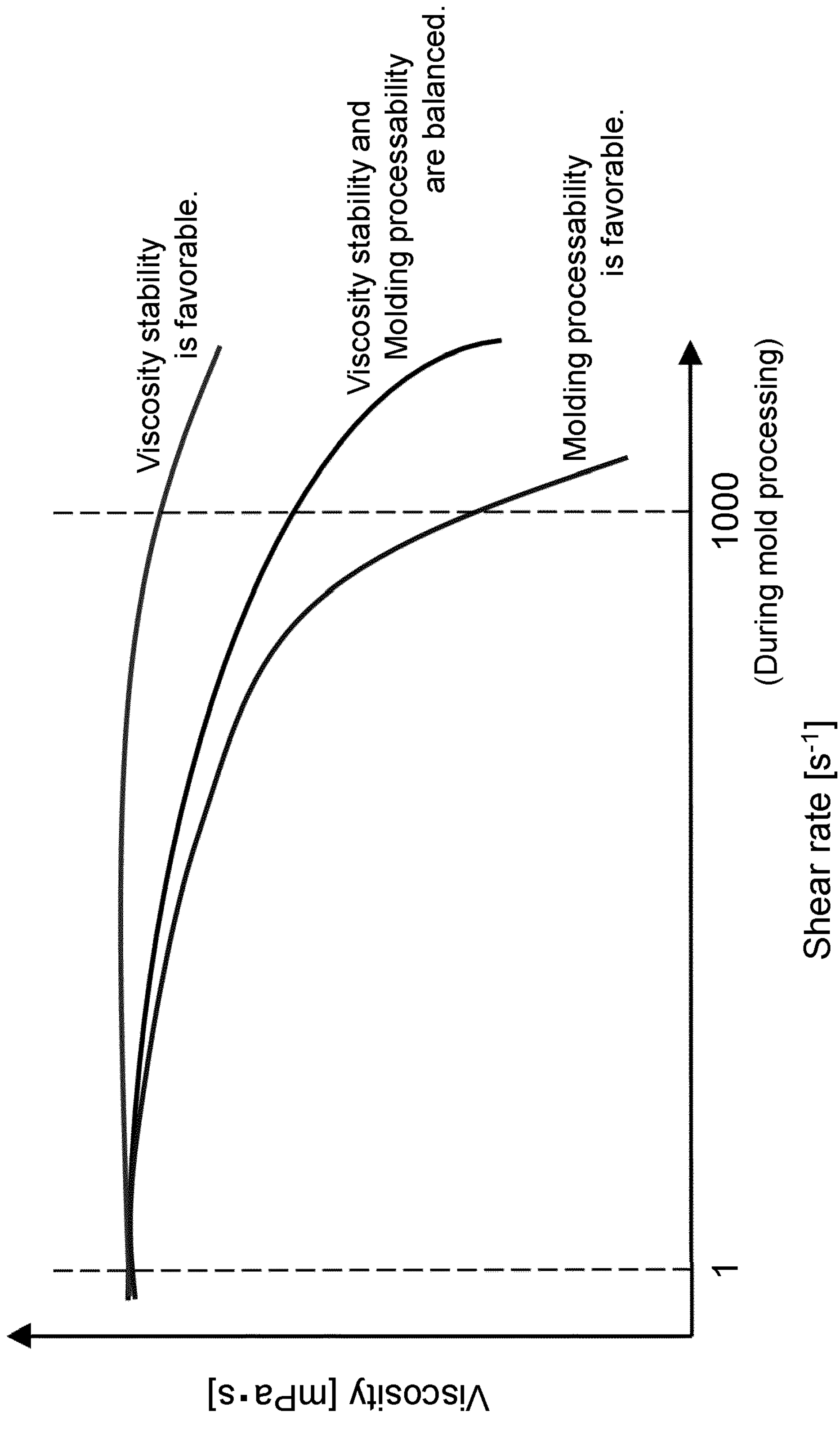
Viscosity stability is favorable.
Viscosity stability and Molding processability are balanced.
Molding processability is favorable.
Viscosity [mPa·s]
1
1000
(During mold processing)
Shear rate [s-1]

Europäisches Patentamt
European Patent Office
Office européen des brevets

# EUROPEAN SEARCH REPORT

Application Number
EP 24 15 7246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2002 275234 A (NIPPON POLYURETHANE KOGYO KK) 25 September 2002 (2002-09-25)<br>* claims 1-7; examples 1-4; table 1 *<br>----- | 1-8 | INV.<br>C08G18/44<br>C08G64/30<br>C09D175/06 |

TECHNICAL FIELDS SEARCHED (IPC)

C08G
C09J
C09D

The present search report has been drawn up for all claims

1

| Place of search | Date of completion of the search | Examiner |
|---|---|---|
| Munich | 4 July 2024 | Sütterlin, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 15 7246

This annex lists the patent family members relating to the patent documents cited in the above-mentioned European search report. The members are as contained in the European Patent Office EDP file on
The European Patent Office is in no way liable for these particulars which are merely given for the purpose of information.

04-07-2024

| Patent document cited in search report | Publication date | Patent family member(s) | Publication date |
|---|---|---|---|
| JP 2002275234 A | 25-09-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002275234 A